(19) Europäisches Patentamt
European Patent Office
Office européen des brevets

(11) **EP 4 529 337 A1**

(12) **EUROPEAN PATENT APPLICATION**
published in accordance with Art. 153(4) EPC

(43) Date of publication:
**26.03.2025 Bulletin 2025/13**

(21) Application number: **22941985.8**

(22) Date of filing: **17.05.2022**

(51) International Patent Classification (IPC):
***H04W 74/08*** (2024.01)

(52) Cooperative Patent Classification (CPC):
**H04W 74/08**

(86) International application number:
**PCT/CN2022/093408**

(87) International publication number:
**WO 2023/220943 (23.11.2023 Gazette 2023/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **QIAO, Xuemei
Beijing 100085 (CN)**

(74) Representative: **Hersina, Günter et al
Schoppe, Zimmermann, Stöckeler
Zinkler, Schenk & Partner mbB
Patentanwälte
Radlkoferstrasse 2
81373 München (DE)**

(54) **RANDOM ACCESS METHOD AND APPARATUS**

(57) Embodiments of the present application disclose a random access method and apparatus, the method comprising: repeatedly transmitting a first random access message to a network device on multiple random access occasions; determining a random access-radio network temporary identifier (RA-RNTI) of a terminal device according to one of the multiple random access occasions; and using the RA-RNTI to detect a second random access message or physical downlink control channel (PDCCH) sent by the network device, so that when performing PRACH repeated transmission, the terminal device can use the RA-RNTI to execute PDCCH blind detection, thereby effectively reducing the complexity of blind detection by the terminal device, reducing the energy consumption of the terminal device, and increasing the communication efficiency of a system.

sending a first random access message to a network device repeatedly at a plurality of random access occasions — 201

determining, according to one of the plurality of random access occasions, a random access-radio network temporary identifier (RA-RNTI) of the terminal device — 202

detecting a second random access message or a physical downlink control channel (PDCCH) sent by the network device by using the RA-RNTI — 203

FIG. 2

**Description**

<u>TECHNICAL FIELD</u>

The disclosure relates to a field of communication technologies, more particularly, to a random access method and a random access apparatus.

<u>BACKGROUND</u>

In a four-step random access procedure, a terminal device in a 5G new radio (NR) system sends a first random access message 1 (Msg1, message 1) to a network device. After receiving the Msg1, the network device can send a second random access message 2 (Msg2, message 2) to the terminal device.
A random access-radio network temporary identifier (RA-RNTI) may represent time-frequency resources used for sending the Msg1. After receiving the Msg1, the network device may calculate the RA-RNTI and takes the RA-RNTI as a scrambling code to scramble cyclic redundancy check (CRC) of physical downlink control channel (PDCCH) downlink control information (DCI) format 1_0 of the Msg2. Therefore, only the terminal device that sends the Msg1 on the time-frequency resources identified by the RA-RNTI can correctly decode the DCI of this PDCCH.

<u>SUMMARY</u>

According to a first aspect of embodiments of the disclosure, a random access method is provided. The method is performed by a terminal device, and includes:

sending a first random access message to a network device repeatedly at a plurality of random access occasions;
determining, according to one of the plurality of random access occasions, a random access-radio network temporary identifier (RA-RNTI) of the terminal device; and
detecting a second random access message or a physical downlink control channel (PDCCH) sent by the network device by using the RA-RNTI.

Optionally, determining, according to one of the plurality of random access occasions, the RA-RNTI of the terminal device, includes:

determining, according to a protocol agreement, a target random access occasion among the plurality of random access occasions; and
determining the RA-RNTI of the terminal device according to the target random access occasion.

Optionally, an index of the target random access occasion has an association relation with a number of the plurality of random access occasions.
Optionally, determining, according to one of the plurality of random access occasions, the RA-RNTI of the terminal device, includes:

receiving indication information sent by the network device, in which the indication information is used to determine a target random access occasion among the plurality of random access occasions; and
determining the RA-RNTI of the terminal device according to the target random access occasion.

Optionally, determining, according to one of the plurality of random access occasions, the RA-RNTI of the terminal device, includes:

determining, according to system frame numbers (SFNs) of system frames where the plurality of random access occasions are, a target random access occasion among the plurality of random access occasions; and
determining the RA-RNTI of the terminal device according to the target random access occasion.

Optionally, indexes of target random access occasions in two groups of random access occasions in adjacent system frames are different.
According to a second aspect of embodiments of the disclosure, a random access method is provided. The method is performed by a network device, and includes:

receiving a first random access message repeatedly sent by a terminal device at a plurality of random access occasions;
determining, according to one of the plurality of random access occasions, a RA-RNTI of the terminal device; and
sending a second random access message or a PDCCH scrambled with the RA-RNTI to the terminal device.

Optionally, determining, according to one of the plurality of random access occasions, the RA-RNTI of the terminal device includes:

determining, according to a protocol agreement, a target random access occasion among the plurality of random access occasions; and
determining the RA-RNTI of the terminal device according to the target random access occasion.

Optionally, an index of the target random access occasion has an association relation with a number of the plurality of random access occasions.

Optionally, determining, according to one of the plurality of random access occasions, the RA-RNTI of the terminal device, includes:

determining a target random access occasion among the plurality of random access occasions;
determining the RA-RNTI of the terminal device according to the target random access occasion; and
sending indication information to the terminal device, in which the indication information indicates the target random access occasion.

Optionally, determining, according to one of the plurality of random access occasions, the RA-RNTI of the terminal device, includes:

determining, according to system frame numbers (SFNs) of system frames where the plurality of random access occasions are, a target random access occasion among the plurality of random access occasions; and
determining the RA-RNTI of the terminal device according to the target random access occasion.

Optionally, indexes of target random access occasions in two groups of random access occasions in adjacent system frames are different.

According to a third aspect of embodiments of the disclosure, a random access apparatus is provided. The apparatus is applied to a terminal device, and includes:

a transceiver unit, configured to send a first random access message to a network device repeatedly at a plurality of random access occasions;
a processing unit, configured to determine, according to one of the plurality of random access occasions, a RA-RNTI of the terminal device; and
the transceiver unit, further configured to detect a second random access message or a PDCCH sent by the network device by using the RA-RNTI.

Optionally, the processing unit is further configured to:

determine, according to a protocol agreement, a target random access occasion among the plurality of random access occasions; and
determine the RA-RNTI of the terminal device according to the target random access occasion.

Optionally, an index of the target random access occasion has an association relation with a number of the plurality of random access occasions.

Optionally, the processing unit is further configured to:

receive indication information sent by the network device, in which the indication information is used to determine a target random access occasion among the plurality of random access occasions; and
determine the RA-RNTI of the terminal device according to the target random access occasion.

Optionally, the processing unit is further configured to:

determine, according to SFNs of system frames where the plurality of random access occasions are, a target random access occasion among the plurality of random access occasions; and

determine the RA-RNTI of the terminal device according to the target random access occasion.

Optionally, indexes of target random access occasions in two groups of random access occasions in adjacent system frames are different.

According to a fourth aspect of embodiments of the disclosure, a random access apparatus is provided. The apparatus is applied to a network device, and includes:

a transceiver unit, configured to receive a first random access message repeatedly sent by a terminal device at a plurality of random access occasions;

a processing unit, configured to determine, according to one of the plurality of random access occasions, a RA-RNTI of the terminal device; and

the transceiver unit, further configured to send a second random access message or a PDCCH scrambled with the RA-RNTI to the terminal device.

Optionally, the processing unit is further configured to:

determine, according to a protocol agreement, a target random access occasion among the plurality of random access occasions; and

determine the RA-RNTI of the terminal device according to the target random access occasion.

Optionally, an index of the target random access occasion has an association relation with a number of the plurality of random access occasions.

Optionally, the processing unit is further configured to:

determine a target random access occasion among the plurality of random access occasions;

determine the RA-RNTI of the terminal device according to the target random access occasion; and

send indication information to the terminal device, in which the indication information is used to indicate the target random access occasion.

Optionally, the processing unit is further configured to:

determine, according to SFNs of system frames where the plurality of random access occasions are, a target random access occasion among the plurality of random access occasions; and

determine the RA-RNTI of the terminal device according to the target random access occasion.

Optionally, indexes of target random access occasions in two groups of random access occasions in adjacent system frames are different.

According to a fifth aspect of embodiments of the disclosure, a communication device is provided. The communication device includes a processor and a memory having a computer program stored thereon. When the computer program is executed by the processor, the device is caused to perform the random access method as described in the embodiments of the first aspect.

According to a sixth aspect of embodiments of the disclosure, a communication device is provided. The communication device includes a processor and a memory having a computer program stored thereon. When the computer program is executed by the processor, the device is caused to perform the random access method as described in the embodiments of the second aspect.

According to a seventh aspect of embodiments of the disclosure, a communication device is provided. The communication device includes a processor and an interface circuit. The interface circuit is configured to receive code instructions and transmit the code instructions to the processor. The processor is configured to run the code instructions to perform the random access method as described in the embodiments of the first aspect.

According to an eighth aspect of embodiments of the disclosure, a communication device is provided. The communication device includes a processor and an interface circuit. The interface circuit is configured to receive code instructions and transmit the code instructions to the processor. The processor is configured to run the code instructions to perform the random access method as described in the embodiments of the second aspect.

According to a ninth aspect of embodiments of the disclosure, a computer-readable storage medium for storing instructions is provided. When the instructions are executed, the random access method as described in the embodiments of the first aspect is implemented.

According to a tenth aspect of embodiments of the disclosure, a computer-readable storage medium for storing instructions is provided. When the instructions are executed, the random access method as described in the embodiments of the second aspect is implemented.

According to an eleventh aspect of embodiments of the disclosure, a computer program is provided. When the computer program is run on a computer, the computer is caused to implement the random access method as described in the embodiments of the first aspect.

According to a twelfth aspect of embodiments of the disclosure, a computer program is provided. When the computer program is run on a computer, the computer is caused to implement the random access method as described in the embodiments of the second aspect.

According to the random access method and the random access apparatus provided in the embodiments of the disclosure, the terminal device sends the first random access message repeatedly to the network device at the plurality of random access occasions, determines its own RA-RNTI according to one of the plurality of random access occasions, and detects the second random access message or the PDCCH sent by the network device by using the RA-RNTI. In this way, the terminal device can perform blind detection for PDCCH using one RA-RNTI during PRACH repetition, which effectively reduces a complexity of the blind detection of the terminal device, reduces an energy consumption of the terminal device, and improves a communication efficiency of the system.

Additional aspects and advantages of embodiments of disclosure will be given in part in the following description, become apparent in part from the following description, or be learned from the practice of embodiments of the disclosure.

## BRIEF DESCRIPTION OF THE DRAWINGS

In order to clearly illustrate technical solutions of embodiments of the disclosure or background technologies, a description of drawings used in embodiments of the disclosure or the background technologies is given below.

FIG. 1 is a structural diagram of a communication system provided in an embodiment of the disclosure.
FIG. 2 is a flowchart of a random access method provided in an embodiment of the disclosure.
FIG. 3 is a flowchart of a random access method provided in an embodiment of the disclosure.
FIG. 4 is a flowchart of a random access method provided in an embodiment of the disclosure.
FIG. 5 is a flowchart of a random access method provided in an embodiment of the disclosure.
FIG. 6a is a schematic diagram of a resource configuration of Physical Random Access Channel (PRACH) repetition provided in an embodiment of the disclosure.
FIG. 6b is a schematic diagram of a method for determining a random access occasion provided in an embodiment of the disclosure.
FIG. 7 is a flowchart of a random access method provided in an embodiment of the disclosure.
FIG. 8 is a schematic diagram of a random access apparatus provided in an embodiment of the disclosure.
FIG. 9 is a schematic diagram of a random access apparatus provided in an embodiment of the disclosure.
FIG. 10 is a schematic diagram of a random access device provided in an embodiment of the disclosure.
FIG. 11 is a schematic diagram of a chip provided in an embodiment of the disclosure.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "upon" or "in response to determining".

Embodiments of the disclosure are described in detail below, and examples of which are illustrated in the accompanying drawings, in which the same or similar symbols indicate the same or similar elements. Embodiments described below with reference to the accompanying drawings are examples and are intended to be used to explain the disclosure and are not to be construed as limiting the disclosure.

In order to better understand a random access method disclosed in embodiments of the disclosure, a communication system to which embodiments of the disclosure are applicable is first described below.

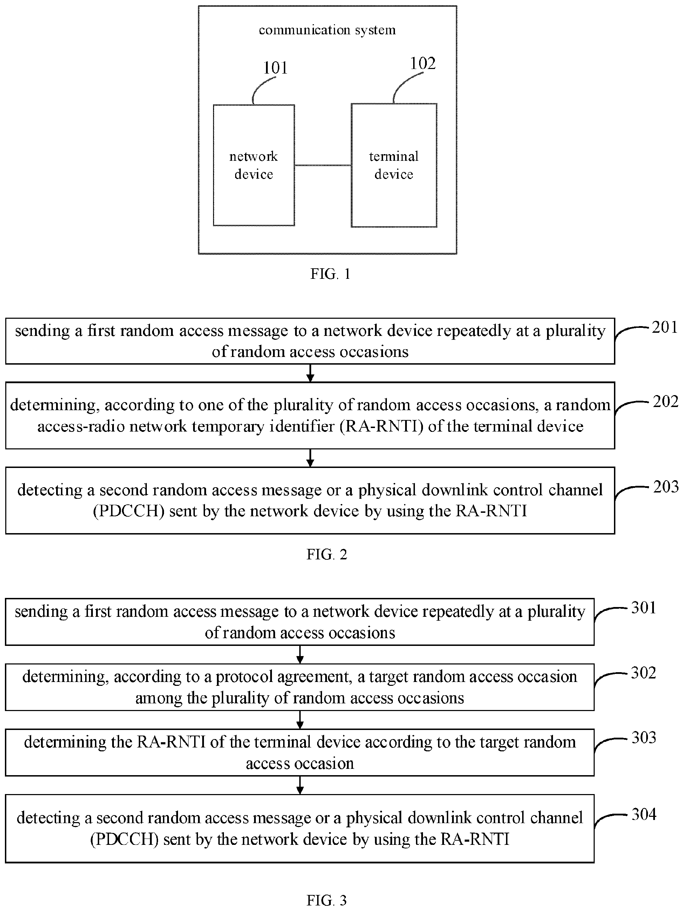

As illustrated in FIG. 1, FIG. 1 is a structural diagram of a communication system provided by an embodiment of the disclosure. The communication system may include, but is not limited to, a first network device, a second network device and a terminal device. The number and the form of devices illustrated in FIG. 1 are only for examples and do not constitute a limitation on embodiments of the disclosure, and two or more network devices and two or more terminal devices may be included in practical applications. The communication system illustrated in FIG. 1 may include, for example, a network device 101 and a terminal device 102.

It is noteworthy that the technical solutions of embodiments of the disclosure may be applied to various communication systems, such as, a long term evolution (LTE) system, a 5th generation (5G) mobile communication system, a 5G new radio (NR) system, or other future new mobile communication systems, etc.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in embodiments of the disclosure. The network device according to embodiments of the disclosure may be composed of a central unit (CU) and distributed units (DUs). The CU may also be called a control unit. The use of CU-DU structure allows to divide a protocol layer of the network device, such as a base station, such that some functions of the protocol layer are placed in the CU for centralized control, and some or all of the remaining functions of the protocol layer are distributed in the DUs, and the DUs are centrally controlled by the CU.

The terminal device 102 in embodiments of the disclosure is an entity on a user side for receiving or transmitting signals, such as a cellular phone. The terminal may also be referred to as a terminal device, a user equipment (UE), a mobile station (MS), a mobile terminal (MT), and the like. The terminal can be a car with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in embodiments of the disclosure.

In a four-step random access procedure, the terminal device 102 in a 5G NR system can send a first random access message 1 (Msg1, message 1) to the network device 101. After receiving the Msg1, the network device 101 may send a second random access message 2 (Msg2, message 2) to the terminal device.

A random access-radio network temporary identifier (RA-RNTI) may represent time-frequency resources used for sending the Msg1. When sending the Msg1, the terminal device 102 calculates and saves the RA-RNTI. After receiving the Msg1, the network device 101 also calculates the RA-RNTI and takes the RA-RNTI as a scrambling code to scramble cyclic redundancy check (CRC) of physical downlink control channel (PDCCH) downlink control information (DCI) format 1_0 of the Msg2. Only the terminal (UE) that sends the Msg1 on the time-frequency resources identified by the RA-RNTI can correctly decode the DCI of this PDCCH.

For physical random access channel (PRACH) coverage enhancement, 3GPP R18 has proposed sending the PRACH multiple times on a time domain, i.e., PRACH repetitions. One possible direction is that the terminal device 102 perform repetitions on a plurality of transmission occasions (i.e., random access channel (RACH) occasions (ROs)) by using the same uplink transmitting beam (UL TX beam). The ROs correspond to a plurality of transmission slots, which may be continuous or discrete, which is not limited here.

If the terminal device 102 performs the PRACH repetitions on a plurality of random access occasions (ROs, RACH (random access channel) occasions), both the network device 101 and the terminal device 102 may perform transmission and detection of Msg2 or a PDCCH for Msg2 by using RA-RNTIs corresponding to different ROs, and thus the terminal device 102 may not be able to detect an Msg2 for the terminal device, or the terminal device 102 uses RA-RNTIs corresponding to the plurality of ROs for detection, which may increase the detection complexity.

It is understood that the communication system described in embodiments of the disclosure is intended to clearly illustrate the technical solutions according to embodiments of the disclosure, and does not constitute a limitation on the technical solutions according to embodiments of the disclosure. It is understandable by those skilled in the art that as evolution of system architectures evolve and emergence of new business scenarios, the technical solutions according to embodiments of the disclosure are also applicable to similar technical problems.

A random access method and a random access apparatus will be introduced in detail below with reference to the accompanying drawings.

As illustrated in FIG. 2, FIG. 2 is a flowchart of a random access method provided in an embodiment of the disclosure. It should be noted that the random access method in an embodiment of the disclosure is performed by a terminal device. This method may be executed independently or in combination with any other embodiments of the disclosure. As illustrated in FIG. 2, the method may include following steps.

At step 201, a first random access message is sent to a network device repeatedly on a plurality of random access occasions (ROs).

In an embodiment of the disclosure, the terminal device repeatedly sends the first random access message Msg1 to the network device on the plurality of ROs. After receiving the Msgl, the network device sends a second random access message Msg2 to the terminal device. The same first random access message is sent on the plurality of ROs.

It should be noted that, in the embodiment of the disclosure, the first random access message Msg1 is a random access preamble, and the second random access message Msg2 is a random access response (RAR).

After sending the first random access message, the terminal device may try to detect the second random access message or a PDCCH sent by the network device in a RAR window.

In an embodiment of the disclosure, the plurality of ROs may be pre-configured by the network device or pre-agreed in a protocol.

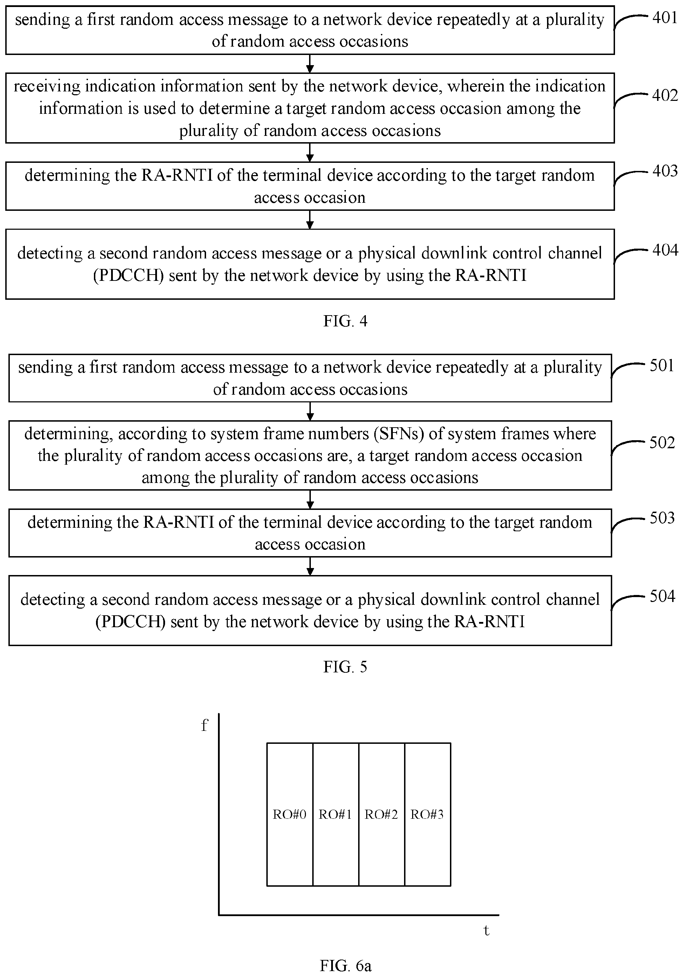

As a possible implementation, the plurality of ROs correspond to a plurality of slots in a time domain. The plurality of slots may be continuous or discrete, which is not limited here. As illustrated in FIG. 6a, FIG. 6a is a schematic diagram of a resource configuration of PRACH repetition provided in an embodiment of the disclosure. The terminal device may repeatedly send the Msg1 on 4 ROs (i.e., RO#0 to RO#3) configured in FIG. 6a.

At step 202, a random access-radio network temporary identifier (RA-RNTI) of the terminal device is determined according to parameters of a target random access occasion among the plurality of random access occasions.

In an embodiment of the disclosure, the terminal device may determine the RA-RATI of the terminal device according to the parameters of one RO of the plurality of ROs, and detects the Msg2 or the PDCCH sent by the network device through the RA-RATI.

In some implementations, the terminal device determines the RO for determining the RA-RNTI according to a protocol agreement. The network device and the terminal device can determine the RA-RNTI according to the parameters related to this RO, so as to prevent a situation that the base station and the terminal device cannot determine which RO's parameters are used to determine the RA-RNTI when receiving the Msgs1 sent on the plurality of ROs.

In some implementations, the terminal device determines the RO for determining the RA-RNTI according to received indication information sent by the network device.

In some implementations, the terminal device determines the RO for determining the RA-RNTI according to system frame numbers (SFNs) of system frames where the plurality of ROs are.

In an embodiment of the disclosure, the RA-RNTI is obtained by the following formula:

$$RA\text{-}RNTI = 1 + s\_id + 14 \times t\_id + 14 \times 80 \times f\_id + 14 \times 80 \times 8 \times ul\_carrier\_id.$$

The meanings of the parameters are shown in the following table:

| Parameter | Meaning |
|---|---|
| s_id | an index of a starting symbol location of a RO, which ranges from 0 to 13 |
| t_id | an index of a starting slot location of a RO within a system frame, which ranges from 0 to 79, and is related to a sub-carrier spacing (SCS) |
| f id | an index of a location of a RO in a frequency domain, which ranges from 0 to 7 |
| ul_carrier_id | a value of ul_carrier_id being 0 in a normal uplink (NUL) scenario, and being 1 in a supplementary uplink (SUL) scenario |

In some possible implementations, the method may also include the following step.

At step 203, a second random access message or a physical downlink control channel (PDCCH) sent by the network device is detected by using the RA-RNTI.

In an embodiment of the disclosure, after sending the Msgl, the terminal device can detect the Msg2 or PDCCH sent by the network device using the RA-RNTI determined in the above step over the RAR window.

In some implementations, the terminal device can detect the PDCCH DCI format 1_0 using the RA-RNTI.

In conclusion, the terminal device sends the first random access message repeatedly to the network device at the plurality of random access occasions, determines its own RA-RNTI according to one of the plurality of random access occasions, and detects the second random access message or the PDCCH sent by the network device by using the RA-RNTI. In this way, the terminal device can perform blind detection for PDCCH using one RA-RNTI during PRACH repetition, which effectively reduces a complexity of the blind detection of the terminal device, reduces an energy consumption of the terminal device, and improves a communication efficiency of the system.

As illustrated in FIG. 3, FIG. 3 is a flowchart of a random access method provided in an embodiment of the disclosure. It should be noted that the random access method in an embodiment of the disclosure is performed by a terminal device. This method can be executed independently or in combination with any other embodiments of the disclosure. As illustrated in FIG. 3, the method may include following steps.

At step 301, a first random access message is sent to a network device repeatedly on a plurality of random access occasions (ROs).

In an embodiment of the disclosure, the terminal device repeatedly sends the first random access message Msg1 to the network device on the plurality of ROs. After receiving the first random access message Msgl, the network device sends a second random access message Msg2 to the terminal device. The same first random access message is sent on the plurality of ROs.

It should be noted that, in the embodiment of the disclosure, the first random access message Msg1 is a random access preamble, and the second random access message Msg2 is a random access response (RAR).

After sending the first random access message Msg1, the terminal device may try to detect the second random access message or a PDCCH sent by the network device in a RAR window.

In an embodiment of the disclosure, the plurality of ROs may be pre-configured by the network device or pre-agreed in a protocol.

As a possible implementation, the plurality of ROs correspond to a plurality of slots in a time domain. The plurality of slots may be continuous or discrete, which is not limited here.

At step 302, a target random access occasion among the plurality of random access occasions is determined according to a protocol agreement.

The target random access occasion is a random access occasion on which the RA-RNTI can be calculated.

In an embodiment of the disclosure, the terminal device determines the target random access occasion on which the RA-RNTI can be calculated among the plurality of random access occasions on which the Msg1 is sent repeatedly according to the protocol agreement. Both the network device and the terminal device can determine the RA-RNTI according to the parameters related to this RO, so as to prevent a situation that the base station and the terminal device cannot determine which RO's parameters are used to determine the RA-RNTI when receiving the Msg1 sent on the plurality of ROs.

In some implementations, the protocol may specify that the target RO is a first RO (such as RO#0 in FIG. 6a) among the plurality of ROs (N ROs in total, N is a positive integer), or that the target RO is a last RO (such as RO#3 in FIG. 6a) among the plurality of ROs (N ROs in total, N is a positive integer), or that the target RO is an M-th RO among the plurality of ROs (N ROs in total, N is a positive integer), where M<N, and M is a positive integer.

In some implementations, an index of the target RO has an association relation with a number of the plurality of ROs. The terminal device can determine the target RO according to the number of ROs on which the PRACH is repeatedly sent.

As an example, the protocol may specify that the target RO is the M-th RO among the plurality of ROs (N ROs in total, N is a positive integer), where M=N/2, etc.

It is understood that the association relation between the index of the target RO and the number of the plurality ROs is only shown as an example, and there may be other association relations, which are not limited here.

At step 303, a RA-RNTI of the terminal device is determined according to parameters of the target random access occasion.

In an embodiment of the disclosure, the terminal device may determine the RA-RNTI of the terminal device according to the target RO.

In an embodiment of the disclosure, the RA-RNTI is obtained by the following formula:

$$\text{RA-RNTI} = 1 + s\_id + 14 \times t\_id + 14 \times 80 \times f\_id + 14 \times 80 \times 8 \times ul\_carrier\_id.$$

The meanings of the parameters are shown in the following table:

| Parameter | Meaning |
|---|---|
| s_id | an index of a starting symbol location of a target RO, which ranges from 0 to 13 |
| t_id | an index of a starting slot location of the target RO within a system frame, which ranges from 0 to 79, and is related to a SCS |
| f id | an index of a location of the target RO in a frequency domain, which ranges from 0 to 7 |

(continued)

| Parameter | Meaning |
|---|---|
| ul_carrier_id | a value of ul_carrier_id being 0 in an NUL scenario, and being 1 in an SUL scenario |

In some possible implementations, the method may also include the following step.

At step 304, a second random access message or a physical downlink control channel (PDCCH) sent by the network device is detected by using the RA-RNTI.

In an embodiment of the disclosure, after sending the Msgl, the terminal device can detect the Msg2 or PDCCH sent by the network device using the RA-RNTI determined in the above step over the RAR window.

In some implementations, the terminal device can use the RA-RNTI to monitor the PDCCH DCI format 1_0.

In conclusion, the terminal device sends the first random access message repeatedly to the network device at the plurality of random access occasions, determines the target random access occasion among the plurality of random access occasions according to the protocol agreement and then determines its own RA-RNTI according to the target RO, and detects the second random access message or the PDCCH sent by the network device by using the RA-RNTI. In this way, the terminal device can perform blind detection for PDCCH using one RA-RNTI during PRACH repetition, which effectively reduces a complexity of the blind detection of the terminal device, reduces an energy consumption of the terminal device, and improves a communication efficiency of the system.

As illustrated in FIG. 4, FIG. 4 is a flowchart of a random access method provided in an embodiment of the disclosure. It should be noted that the random access method in the embodiment of the disclosure is performed by a terminal device. This method can be executed independently or in combination with any other embodiments of the disclosure. As illustrated in FIG. 4, the method may include following steps.

At step 401, a first random access message is sent to a network device repeatedly on a plurality of random access occasions (ROs).

In an embodiment of the disclosure, the terminal device repeatedly sends the first random access message Msg1 to the network device on the plurality of ROs. After receiving the first random access message Msgl, the network device sends a second random access message Msg2 to the terminal device. The same first random access message Msg1 is sent on the plurality of ROs.

It should be noted that, in an embodiment of the disclosure, the first random access message Msg1 is a random access preamble, and the second random access message Msg2 is a random access response (RAR).

After sending the first random access message Msgl, the terminal device may try to detect the second random access message Msg2 or a PDCCH sent by the network device in a RAR window.

In an embodiment of the disclosure, the plurality of ROs may be pre-configured by the network device or pre-agreed in a protocol.

As a possible implementation, the plurality of ROs correspond to a plurality of slots in a time domain. The plurality of slots may be continuous or discrete, which is not limited here.

At step 402, indication information sent by the network device is received, in which the indication information is used to determine a target random access occasion among the plurality of random access occasions.

The target random access occasion is a random access occasion used for determining the RA-RNTI.

In an embodiment of the disclosure, the terminal device receives the indication information sent by the network device, and determines the target random access occasion on which the RA-RNTI can be calculated among the plurality of random access occasions when the Msg1 is repeatedly sent according to the received indication information. Both the network device and the terminal device can determine the RA-RNTI according to the parameters related to the RO, so as to prevent a situation that the base station and the terminal device cannot determine which RO's parameters are used to determine the RA-RNTI when receiving the Msg1 sent on the plurality of ROs.

In some implementations, the indication information may indicate that the target RO is an M-th RO among the plurality of ROs (N ROs in total, N is a positive integer), where $M \leq N$, and M is a positive integer.

Optionally, the indication information may explicitly indicate the target RO, e.g., directly indicating the value of M or the index of the target RO, or may implicitly indicate the target RO.

At step 403, a RA-RNTI of the terminal device is determined according to parameters of the target random access occasion.

In an embodiment of the disclosure, the terminal device may determine the RA-RNTI of the terminal device according to the target RO.

In an embodiment of the disclosure, the RA-RNTI is obtained by the following formula:

$$\text{RA-RNTI} = 1 + s\_id + 14 \times t\_id + 14 \times 80 \times f\_id + 14 \times 80 \times 8 \times ul\_carrier\_id.$$

The meanings of the parameters are shown in the following table:

| Parameter | Meaning |
|---|---|
| s_id | an index of a starting symbol location of a target RO, which ranges from 0 to 13 |
| t_id | an index of a starting slot location of the target RO within a system frame, which ranges from 0 to 79, and is related to a SCS |
| f id | an index of a location of the target RO in a frequency domain, which ranges from 0 to 7 |
| ul_carrier_id | a value of ul_carrier_id being 0 in an NUL scenario, and being 1 in an SUL scenario |

In some possible implementations, the method may also include the following step.

At step 404, a second random access message or a physical downlink control channel (PDCCH) sent by the network device is detected by using the RA-RNTI.

In an embodiment of the disclosure, after sending the Msgl, the terminal device can detect the Msg2 or PDCCH sent by the network device using the RA-RNTI determined in the above step over the RAR window.

In some implementations, the terminal device can use the RA-RNTI to monitor the PDCCH DCI format 1_0.

In conclusion, the terminal device sends the first random access message repeatedly to the network device at the plurality of random access occasions, receives the indication information sent by the network device, in which the indication information is used to determine the target RO among the plurality of ROs, determines its own RA-RNTI according to the target RO, and detects the second random access message or the PDCCH sent by the network device by using the RA-RNTI. In this way, the terminal device can perform blind detection for PDCCH using one RA-RNTI during PRACH repetition, which effectively reduces a complexity of the blind detection of the terminal device, reduces an energy consumption of the terminal device, and improves a communication efficiency of the system.

As illustrated in FIG. 5, FIG. 5 is a flowchart of a random access method provided in an embodiment of the disclosure. It should be noted that the random access method in the embodiment of the disclosure is performed by a terminal device. This method can be executed independently or in combination with any other embodiments of the disclosure. As illustrated in FIG. 5, the method may include following steps.

At step 501, a first random access message is sent to a network device repeatedly on a plurality of random access occasions (ROs).

In an embodiment of the disclosure, the terminal device repeatedly sends the first random access message Msg1 to the network device on the plurality of ROs. After receiving the first random access message Msgl, the network device sends a second random access message Msg2 to the terminal device. The same first random access message Msg1 is sent on the plurality of ROs.

It should be noted that, in an embodiment of the disclosure, the first random access message Msg1 is a random access preamble, and the second random access message Msg2 is a random access response (RAR).

After sending the first random access message Msg1, the terminal device may try to detect the second random access message Msg2 or a PDCCH sent by the network device in a RAR window.

In an embodiment of the disclosure, the plurality of ROs may be pre-configured by the network device or pre-agreed in a protocol.

As a possible implementation, the plurality of ROs correspond to a plurality of slots in a time domain. The plurality of slots may be continuous or discrete, which is not limited here.

At step 502, a target random access occasion among the plurality of random access occasions is determined according to system frame numbers (SFNs) of system frames where the plurality of random access occasions are.

The target random access occasion is a random access occasion used for determining the RA-RNTI.

In an embodiment of the disclosure, the terminal device determines, according to the SFNs of the system frames where the plurality of ROs are, the target random access occasion on which the RA-RNTI can be calculated among the plurality of random access occasions on which the Msgs1 is repeatedly sent. Both the network device and the terminal device can determine the RA-RNTI according to parameters related to the RO, so as to prevent a situation that the base station and the terminal device cannot determine which RO's parameters are used to determine the RA-RNTI when receiving the Msg1 sent on the plurality of ROs.

In an embodiment of the disclosure, the SFNs of the system frames where the plurality of ROs are located are different, and the time domain location of the determined target RO may be different in the plurality of ROs.

In some implementations, the indexes of the target ROs in two groups of random access occasions in adjacent system frames are different.

In some implementations, the target RO may be determined according to a remainder of the SFNs of the system frames where the plurality of ROs are located relative to a specified value.

As an example, when SFN mod Q=0, a first RO among N ROs is used as the target RO for calculating the RA-RNTI. When SFN mod Q=1, a second RO among N ROs is used as the target RO for calculating the RA-RNTI. When SFN mod Q=2, a third RO among N ROs is used as the target RO for calculating the RA-RNTI, and the like. It is noted that mod represents a remainder operation, and Q is a positive integer.

Optionally, the value of the specified value Q may be specified by a protocol, or may be determined by an indication from the network device, or may be determined according to a length of the RAR window. For example, when the RAR window includes 4 SFNs (40ms), Q=4.

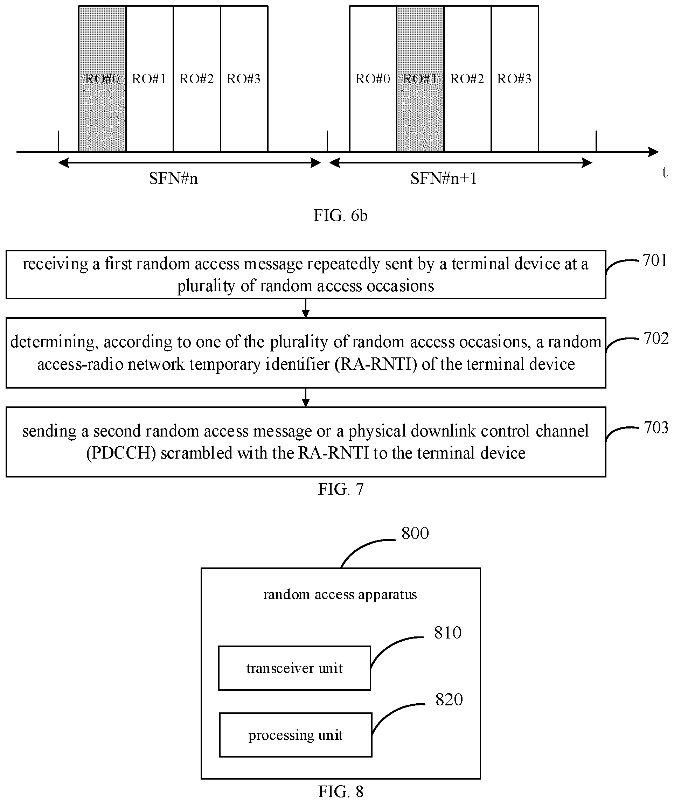

As an example, FIG. 6b is a schematic diagram of a method for determining a random access occasion provided in an embodiment of the disclosure. In FIG. 6b, both the system frame SFN#n and the system frame SFN#n+1 are configured with a plurality of ROs for repeatedly sending the PRACH. If n mod Q=0, the first RO of the four ROs is determined as the target RO, and if n+1 mod Q=1, the second RO of the four ROs is determined as the target RO.

In an embodiment of the disclosure, the target ROs determined by two groups of random access occasions in the adjacent system frames are different, which can avoid a situation where the terminal device may repeatedly interpret a DCI, especially in a scenario where configuration for a NR in Unlicensed Spectrum (NR-U) RAR window is relatively long.

It should be noted that if slots and symbols of a plurality of ROs in the SFN#n are the same as slots and symbols of a plurality of ROs in the SFN#n+1, and the RAR window is greater than 10ms, a RAR window for the SFN#n may include a RAR window for the SFN#n+1, which means that the two RAR windows may overlap. The RAR window for the SFN#n may receive a RAR for the SFN#n+1. If the RA-RNTIs of the two RARs are consistent (that is, the ROs with the same index are selected as the target RO), the terminal device may repeatedly interpret the DCI.

At step 503, a RA-RNTI of the terminal device is determined according to the target random access occasion.

In an embodiment of the disclosure, the terminal device may determine the RA-RNTI of the terminal device according to the target RO.

In an embodiment of the disclosure, the RA-RNTI is obtained by the following formula:

$$RA\text{-}RNTI = 1 + s\_id + 14 \times t\_id + 14 \times 80 \times f\_id + 14 \times 80 \times 8 \times ul\_carrier\_id.$$

The meanings of the parameters are shown in the following table:

| Parameter | Meaning |
|---|---|
| s_id | an index of a starting symbol location of a target RO, which ranges from 0 to 13 |
| t_id | Within a system frame, t_id represents an index of a starting slot location of the target RO within a system frame, which ranges from 0 to 79, and is related to a SCS |
| f id | an index of a location of the target RO in the frequency domain, which ranges from 0 to 7 |
| ul_carrier_id | a value of ul_carrier_id being 0 in an NUL scenario, and being 1 in an SUL scenario |

In some possible implementations, the method also includes the following step.

At step 504, a second random access message or a physical downlink control channel (PDCCH) sent by the network device is detected by using the RA-RNTI.

In an embodiment of the disclosure, after sending the Msgl, the terminal device can detect the Msg2 or PDCCH sent by the network device using the RA-RNTI determined in the above step over the RAR window.

In some implementations, the terminal device can use the RA-RNTI to monitor the PDCCH DCI format 1_0.

In conclusion, the terminal device sends the first random access message repeatedly to the network device at the plurality of random access occasions and then determines the target RO among the plurality of ROs according to the SFNs of the system frames where the plurality of ROs are, and determines its own RA-RNTI according to the target RO, and detects the second random access message or the PDCCH sent by the network device by using the RA-RNTI. In this way, the terminal device can perform blind detection for PDCCH using one RA-RNTI during PRACH repetition, which effectively reduces a complexity of the blind detection of the terminal device, reduces an energy consumption of the terminal device, and improves a communication efficiency of the system.

As illustrated in FIG. 7, FIG. 7 is a flowchart of a random access method provided in an embodiment of the disclosure. It should be noted that the random access method in an embodiment of the disclosure is performed by a network device. This method can be executed independently or in combination with any other embodiments of the disclosure. As illustrated in FIG. 7, the method may include following steps.

At step 701, a first random access message repeatedly sent by a terminal device at a plurality of random access occasions is received.

In an embodiment of the disclosure, the terminal device repeatedly sends the first random access message Msg1 to the network device on the plurality of random access occasions ROs. The same first random access message is sent on the plurality of ROs. After receiving the Msgl, the network device can send a second random access message Msg2 to the terminal device.

It should be noted that, in an embodiment of the disclosure, the e first random access message Msg1 is a random access preamble, and the second random access message Msg2 is a RAR.

In some implementations, the network device may perform a combined correlation detection of Msg1 (preamble) on the last RO of the plurality of ROs.

After receiving the Msg1, the network device calculates the RA-RNTI and sends a second random access message or a PDCCH scrambled with the RA-RNTI to the terminal device.

In an embodiment of the disclosure, the plurality of ROs may be pre-configured by the network device or pre-agreed in a protocol.

As a possible implementation, the plurality of ROs correspond to a plurality of slots in a time domain. The plurality of slots may be continuous or discrete, which is not limited here.

At step 702, a RA-RNTI of the terminal device is determined according to parameters of a target random access occasion among the plurality of random access occasions.

In an embodiment of the disclosure, the terminal device determines the RA-RATI of the terminal device according to one of the plurality of configured ROs, and uses the RA-RATI to scramble the PDCCH DCI format1_0 to be sent.

In some implementations, the network device can determine the random access occasion RO for calculating the RA-RNTI according to a protocol agreement.

In some implementations, the network device determines the random access occasion RO for calculating the RA-RNTI by itself, and sends indication information to the terminal device. The indication information is used to indicate the target random access occasion RO.

In some implementations, the network device can determine the random access occasion RO for calculating the RA-RNTI according to the SFNs of the system frames where the plurality of ROs are.

In an embodiment of the disclosure, the RA-RNTI is obtained by the following formula:

$$RA\text{-}RNTI = 1 + s\_id + 14 \times t\_id + 14 \times 80 \times f\_id + 14 \times 80 \times 8 \times ul\_carrier\_id.$$

The meanings of the parameters are shown in the following table:

| Parameter | Meaning |
| --- | --- |
| s_id | an index of a starting symbol location of a RO, which ranges from 0 to 13 |
| t_id | an index of a starting slot location of the a RO within a system frame, which ranges from 0 to 79, and is related to an SCS |
| f id | an index of a location of the target RO in the frequency domain, which ranges from 0 to 7 |
| ul_carrier_id | a value of ul_carrier_id being 0 in an NUL scenario, and being 1 in an SUL scenario |

In some possible implementations, the method may also include the following step.

At step 703, a second random access message or a PDCCH scrambled with the RA-RNTI is sent to the terminal device.

In an embodiment of the disclosure, after receiving the Msgl, the network device sends the Msg2 or PDCCH scrambled using the RA-RNTI determined in the above steps to the terminal device.

In some implementations, the network device can use the RA-RNTI as a scrambling code to scramble the PDCCH DCI format 1_0.

In conclusion, the network device may receive Secondary Cell Group (SCG) failure information from the terminal device, in which the SCG failure information includes Primary Secondary Cell (PSCell) addition or change relevant information, so that when the SCG failure occurs, the network device is still able to obtain the PSCell addition or change relevant information. In this way, the network device can obtain the PSCell addition or change relevant information more comprehensively, and then more accurately analyze the cause of SCG failure, which effectively improves the communication efficiency of the system.

Corresponding to the random access method provided in the above-mentioned embodiments, the disclosure also provides a random access apparatus. The random access apparatus provided in an embodiment of the disclosure corresponds to the method provided in the above-mentioned embodiments, and thus implementations of the random access method are also applicable to the random access apparatus provided in the following embodiments, and will not be described in detail in the following embodiments.

As illustrated in FIG. 8, FIG. 8 is a schematic diagram of a random access apparatus provided in an embodiment of the disclosure.

In FIG. 8, the random access apparatus 800 includes: a transceiver unit 810 and a processing unit 820.

The transceiver unit 810 is configured to send a first random access message to a network device repeatedly at a plurality of random access occasions.

The processing unit 820 is configured to determine, according to one of the plurality of random access occasions, a RA-RNTI of the terminal device.

The transceiver unit 810 is further configured to detect a second random access message or a PDCCH sent by the network device by using the RA-RNTI.

Optionally, the processing unit 820 is further configured to:

determine, according to a protocol agreement, a target RO among the plurality of ROs; and
determine the RA-RNTI of the terminal device according to the target RO.

Optionally, an index of the target random access occasion has an association relation with a number of the plurality of random access occasions.

Optionally, the processing unit 820 is further configured to:

receive indication information sent by the network device, in which the indication information is used to determine a target random access occasion among the plurality of random access occasions; and
determine the RA-RNTI of the terminal device according to the target random access occasion.

Optionally, the processing unit 820 is further configured to:

determine, according to SFNs of system frames where the plurality of random access occasions are, a target random access occasion among the plurality of random access occasions; and
determine the RA-RNTI of the terminal device according to the target random access occasion.

Optionally, indexes of target random access occasions in two groups of random access occasions in adjacent system frames are different.

The random access apparatus of the embodiment of the disclosure sends the first random access message repeatedly to the network device at the plurality of random access occasions, determines its own RA-RNTI according to one of the plurality of random access occasions, and detects the second random access message or the PDCCH sent by the network device by using the RA-RNTI. In this way, the terminal device can perform blind detection for PDCCH using one RA-RNTI during PRACH repetition, which effectively reduces a complexity of the blind detection of the terminal device, reduces an energy consumption of the terminal device, and improves a communication efficiency of the system.

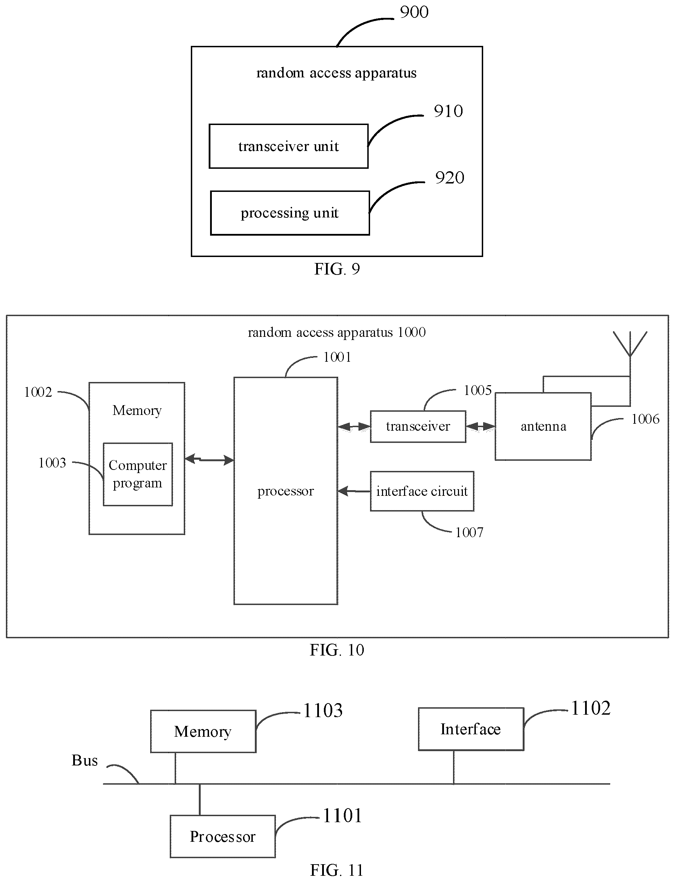

As illustrated in FIG. 9, FIG. 9 is a schematic diagram of a random access apparatus provided in an embodiment of the disclosure.

In FIG. 9, the random access apparatus 900 includes: a transceiver unit 910 and a processing unit 920.

The transceiver unit 910 is configured to receive a first random access message repeatedly sent by a terminal device at a plurality of random access occasions.

The processing unit 920 is configured to determine, according to one of the plurality of random access occasions, a RA-RNTI of the terminal device.

The transceiver unit 910 is further configured to send a second random access message or a PDCCH scrambled with the RA-RNTI to the terminal device.

Optionally, the processing unit 920 is further configured to:

determine, according to a protocol agreement, a target random access occasion among the plurality of random access occasions; and
determine the RA-RNTI of the terminal device according to the target random access occasion.

Optionally, an index of the target random access occasion has an association relation with a number of the plurality of random access occasions.

Optionally, the processing unit 920 is further configured to:

determine a target random access occasion among the plurality of random access occasions;

determine the RA-RNTI of the terminal device according to the target random access occasion; and
send indication information to the terminal device, in which the indication information is used to indicate the target random access occasion.

Optionally, the processing unit 920 is further configured to:

determine, according to SFNs of system frames where the plurality of random access occasions are, a target random access occasion among the plurality of random access occasions; and
determine the RA-RNTI of the terminal device according to the target random access occasion.

Optionally, indexes of target random access occasions in two groups of random access occasions in adjacent system frames are different.

The random access apparatus of this embodiment may receive SCG failure information from the terminal device, in which the SCG failure information includes PSCell addition or change relevant information, so that when the SCG failure occurs, the network device is still able to obtain the PSCell addition or change relevant information. In this way, the network device can obtain the PSCell addition or change relevant information more comprehensively, and then more accurately analyze the cause of SCG failure, which effectively improves the communication efficiency of the system.

In order to realize above embodiments, an embodiment of the disclosure provides a communication device including: a processor and a memory having a computer program stored thereon. When the computer program is executed by the processor, the device is caused to implement the methods illustrated in embodiments of FIGs. 2-5.

In order to realize above embodiments, an embodiment of the disclosure provides another communication device including: a processor and a memory having a computer program stored thereon. When the computer program is executed by the processor, the device is caused to implement the method illustrated in embodiment of FIG. 7.

In order to realize above embodiments, an embodiment of the disclosure provides a communication device including: a processor and an interface circuit. The interface circuit is configured to receive code instructions and transmit the code instructions to the processor. The processor is configured to run the code instructions to implement the methods illustrated in embodiments of FIGs. 2-5.

In order to realize above embodiments, an embodiment of the disclosure provides another communication device including: a processor and an interface circuit. The interface circuit is configured to receive code instructions and transmit the code instructions to the processor. The processor is configured to run the code instructions to perform the method illustrated in embodiment of FIG. 7.

As illustrated in FIG. 10, FIG. 10 is a schematic diagram illustrating a random access apparatus 1000 according to an embodiment of the disclosure. The random access apparatus 1000 may be a network device, a terminal device, or a chip, a chip system or a processor that supports the network device to realize the above-described methods, or a chip, a chip system or a processor that supports the terminal device to realize the above-described methods. The apparatus may be used to realize the methods described in the above method embodiments with reference to the description of the above-described method embodiments.

The random access apparatus 1000 may include one or more processors 1001. The processor 1001 may be a general purpose processor or a dedicated processor, such as, a baseband processor or a central processor. The baseband processor is used for processing communication protocols and communication data. The central processor is used for controlling the random access apparatus (e.g., base station, baseband chip, terminal device, terminal device chip, DU, or CU), executing computer programs, and processing data of the computer programs.

Optionally, the random access apparatus 1000 may include one or more memories 1002 on which computer programs 1003 may be stored. The processor 1001 executes the computer programs 1003 to cause the random access apparatus 1000 to perform the methods described in the above method embodiments. The computer programs 1003 may be solidified in the processor 1001, in which case the processor 1001 may be implemented by hardware.

Optionally, data may be stored in the memory 1002. The random access apparatus 1000 and the memory 1002 may be provided separately or may be integrated together.

Optionally, the random access apparatus 1000 may also include a transceiver 1005 and an antenna 1006. The transceiver 1005 may be referred to as a transceiver unit, a transceiver machine, or a transceiver circuit, for realizing the transceiver function. The transceiver 1005 may include a receiver and a transmitter. The receiver may be referred to as a receiver machine or a receiving circuit, for realizing the receiving function. The transmitter may be referred to as a transmitter machine or a transmitting circuit, for realizing the transmitting function.

Optionally, the random access apparatus 1000 may also include one or more interface circuits 1007. The interface circuits 1007 are used to receive code instructions and transmit the code instructions to the processor 1001. The processor 1001 runs the code instructions to cause the random access apparatus 1000 to perform the methods described in the method embodiments.

In an implementation, the processor 1001 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the random access apparatus 1000 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The random access apparatus in the above description of embodiments may be a network device or a terminal device, but the scope of the random access apparatus described in the disclosure is not limited thereto, and the structure of the random access apparatus may not be limited by FIGS. 8 and 9. The random access apparatus may be a stand-alone device or may be part of a larger device. For example, the random access apparatus may be:

(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

The case where the random access apparatus may be a chip or a chip system may be referred to the schematic diagram of a chip shown in FIG. 11, the chip includes a processor 1101 and an interface 1102. There may be one or more processors 1101, and there may be multiple interfaces 1102.

For the case where the chip is used to implement the functions of the network device in the embodiments of the disclosure,

the interface 1102 is configured to receive code instructions and transmit the code instructions to the processor; and
the processor 1101 is configured to run the code instructions to implement the methods of FIGS. 2-5.
For the case where the chip is used to implement the functions of the terminal device in the embodiments of the disclosure,
the interface 1102 is configured to receive code instructions and transmit the code instructions to the processor; and
the processor 1101 is configured to run the code instructions to implement the method of FIG. 7.

Optionally, the chip further includes a memory 1103 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a communication system. The system includes a random access apparatus as a terminal device and a random access apparatus as a network device in the preceding embodiments of FIGS. 8-9. Or, the system includes a random access apparatus as a terminal device and a random access apparatus as a network device in the preceding embodiment of FIG. 10.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

It is understandable that the steps may be reordered, added or deleted using various forms of the processes shown above. For example, the steps in the disclosure may be performed in parallel or sequentially or in different orders, as long as the desired results of the technical solutions disclosed in the disclosure are achieved, which are not limited herein.

The specific embodiments described above do not constitute a limitation on the scope of protection of the disclosure. It should be understood by those skilled in the art that various modifications, combinations, sub-combinations and substitutions may be made depending on the design requirements and other factors. Any modifications, equivalent substitutions and improvements made within the spirit and principles of the disclosure shall be included in the scope of protection of the disclosure.

## Claims

1.  A random access method, performed by a terminal device, comprising:

    sending a first random access message to a network device repeatedly at a plurality of random access occasions;
    determining, according to one of the plurality of random access occasions, a random access-radio network temporary identifier (RA-RNTI) of the terminal device; and
    detecting a second random access message or a physical downlink control channel (PDCCH) sent by the network device by using the RA-RNTI.

EP 4 529 337 A1

**2.** The method of claim 1, wherein determining, according to one of the plurality of random access occasions, the RA-RNTI of the terminal device comprises:

determining, according to a protocol agreement, a target random access occasion among the plurality of random access occasions; and
determining the RA-RNTI of the terminal device according to the target random access occasion.

**3.** The method of claim 2, wherein an index of the target random access occasion has an association relation with a number of the plurality of random access occasions.

**4.** The method of claim 1, wherein determining, according to one of the plurality of random access occasions, the RA-RNTI of the terminal device comprises:

receiving indication information sent by the network device, wherein the indication information is used to determine a target random access occasion among the plurality of random access occasions; and
determining the RA-RNTI of the terminal device according to the target random access occasion.

**5.** The method of claim 1, wherein determining, according to one of the plurality of random access occasions, the RA-RNTI of the terminal device comprises:

determining, according to system frame numbers (SFNs) of system frames where the plurality of random access occasions are, a target random access occasion among the plurality of random access occasions; and
determining the RA-RNTI of the terminal device according to the target random access occasion.

**6.** The method of claim 5, wherein indexes of target random access occasions in two groups of random access occasions in adjacent system frames are different.

**7.** A random access method, performed by a network device, comprising:

receiving a first random access message repeatedly sent by a terminal device at a plurality of random access occasions;
determining, according to one of the plurality of random access occasions, a random access-radio network temporary identifier (RA-RNTI) of the terminal device; and
sending a second random access message or a physical downlink control channel (PDCCH) scrambled with the RA-RNTI to the terminal device.

**8.** The method of claim 7, wherein determining, according to one of the plurality of random access occasions, the RA-RNTI of the terminal device comprises:

determining, according to a protocol agreement, a target random access occasion among the plurality of random access occasions; and
determining the RA-RNTI of the terminal device according to the target random access occasion.

**9.** The method of claim 8, wherein an index of the target random access occasion has an association relation with a number of the plurality of random access occasions.

**10.** The method of claim 7, wherein determining, according to one of the plurality of random access occasions, the RA-RNTI of the terminal device comprises:

determining a target random access occasion among the plurality of random access occasions;
determining the RA-RNTI of the terminal device according to the target random access occasion; and
sending indication information to the terminal device, wherein the indication information indicates the target random access occasion.

**11.** The method of claim 7, wherein determining, according to one of the plurality of random access occasions, the RA-RNTI of the terminal device comprises:

determining, according to system frame numbers (SFNs) of system frames where the plurality of random access

17

occasions are, a target random access occasion among the plurality of random access occasions; and determining the RA-RNTI of the terminal device according to the target random access occasion.

12. The method of claim 11, wherein indexes of target random access occasions in two groups of random access occasions in adjacent system frames are different.

13. A random access apparatus, applied to a terminal device, comprising:

a transceiver unit, configured to send a first random access message to a network device repeatedly on a plurality of random access occasions;
a processing unit, configured to determine, according to one of the plurality of random access occasions, a random access-radio network temporary identifier (RA-RNTI) of the terminal device; and
the transceiver unit, further configured to detect a second random access message or a physical downlink control channel (PDCCH) sent by the network device by using the RA-RNTI.

14. The apparatus of claim 13, wherein the processing unit is further configured to:

determine, according to a protocol agreement, a target random access occasion among the plurality of random access occasions; and
determine the RA-RNTI of the terminal device according to the target random access occasion.

15. The apparatus of claim 14, wherein an index of the target random access occasion has an association relation with a number of the plurality of random access occasions.

16. The apparatus of claim 13, wherein the processing unit is further configured to:

receive indication information sent by the network device, wherein the indication information is used to determine a target random access occasion among the plurality of random access occasions; and
determine the RA-RNTI of the terminal device according to the target random access occasion.

17. The apparatus of claim 13, wherein the processing unit is further configured to:

determine, according to system frame numbers (SFNs) of system frames where the plurality of random access occasions are, a target random access occasion among the plurality of random access occasions; and
determine the RA-RNTI of the terminal device according to the target random access occasion.

18. The apparatus of claim 17, wherein indexes of target random access occasions in two groups of random access occasions in adjacent system frames are different.

19. A random access apparatus, applied to a network device, comprising:

a transceiver unit, configured to receive a first random access message repeatedly sent by a terminal device on a plurality of random access occasions;
a processing unit, configured to determine, according to one of the plurality of random access occasions, a random access-radio network temporary identifier (RA-RNTI) of the terminal device; and
the transceiver unit, further configured to send a second random access message or a physical downlink control channel (PDCCH) scrambled with the RA-RNTI to the terminal device.

20. The apparatus of claim 19, wherein the processing unit is further configured to:

determine, according to a protocol agreement, a target random access occasion among the plurality of random access occasions; and
determine the RA-RNTI of the terminal device according to the target random access occasion.

21. The apparatus of claim 20, wherein an index of the target random access occasion has an association relation with a number of the plurality of random access occasions.

22. The apparatus of claim 19, wherein the processing unit is further configured to:

determine a target random access occasion among the plurality of random access occasions;
determine the RA-RNTI of the terminal device according to the target random access occasion; and
send indication information to the terminal device, wherein the indication information indicates the target random access occasion.

23. The apparatus of claim 19, wherein the processing unit is further configured to:

determine, according to system frame numbers (SFNs) of system frames where the plurality of random access occasions are, a target random access occasion among the plurality of random access occasions; and
determine the RA-RNTI of the terminal device according to the target random access occasion.

24. The apparatus of claim 23, wherein indexes of target random access occasions in two groups of random access occasions in adjacent system frames are different.

25. A communication device, comprising a processor and a memory having a computer program stored thereon, wherein when the computer program is executed by the processor, the device is caused to perform the method of any one of claims 1-6.

26. A communication device, comprising a processor and a memory having a computer program stored thereon, wherein when the computer program is executed by the processor, the device is caused to perform the method of any one of claims 7-12.

27. A communication device, comprising a processor and an interface circuit;

wherein the interface circuit is configured to receive code instructions and transmit the code instructions to the processor; and
the processor is configured to run the code instructions to perform the method of any one of claims 1-6.

28. A communication device, comprising a processor and an interface circuit;

wherein the interface circuit is configured to receive code instructions and transmit the code instructions to the processor; and
the processor is configured to run the code instructions to perform the method of any one of claims 7-12.

29. A computer-readable storage medium for storing instructions, wherein when the instructions are executed, the method of any one of claims 1-6 is implemented.

30. A computer-readable storage medium for storing instructions, wherein when the instructions are executed, the method of any one of claims 7-12 is implemented.

communication system

101    102

| network device | terminal device |

FIG. 1

sending a first random access message to a network device repeatedly at a plurality of random access occasions — 201

determining, according to one of the plurality of random access occasions, a random access-radio network temporary identifier (RA-RNTI) of the terminal device — 202

detecting a second random access message or a physical downlink control channel (PDCCH) sent by the network device by using the RA-RNTI — 203

FIG. 2

sending a first random access message to a network device repeatedly at a plurality of random access occasions — 301

determining, according to a protocol agreement, a target random access occasion among the plurality of random access occasions — 302

determining the RA-RNTI of the terminal device according to the target random access occasion — 303

detecting a second random access message or a physical downlink control channel (PDCCH) sent by the network device by using the RA-RNTI — 304

FIG. 3

sending a first random access message to a network device repeatedly at a plurality of random access occasions ⌐ 401

receiving indication information sent by the network device, wherein the indication information is used to determine a target random access occasion among the plurality of random access occasions ⌐ 402

determining the RA-RNTI of the terminal device according to the target random access occasion ⌐ 403

detecting a second random access message or a physical downlink control channel (PDCCH) sent by the network device by using the RA-RNTI ⌐ 404

FIG. 4

sending a first random access message to a network device repeatedly at a plurality of random access occasions ⌐ 501

determining, according to system frame numbers (SFNs) of system frames where the plurality of random access occasions are, a target random access occasion among the plurality of random access occasions ⌐ 502

determining the RA-RNTI of the terminal device according to the target random access occasion ⌐ 503

detecting a second random access message or a physical downlink control channel (PDCCH) sent by the network device by using the RA-RNTI ⌐ 504

FIG. 5

f

| RO#0 | RO#1 | RO#2 | RO#3 |

t

FIG. 6a

RO#0 | RO#1 | RO#2 | RO#3 ... RO#0 | RO#1 | RO#2 | RO#3

SFN#n ← → SFN#n+1

*t*

FIG. 6b

| receiving a first random access message repeatedly sent by a terminal device at a plurality of random access occasions | ~701 |

| determining, according to one of the plurality of random access occasions, a random access-radio network temporary identifier (RA-RNTI) of the terminal device | ~702 |

| sending a second random access message or a physical downlink control channel (PDCCH) scrambled with the RA-RNTI to the terminal device | ~703 |

FIG. 7

~800

random access apparatus

transceiver unit — 810

processing unit — 820

FIG. 8

900

random access apparatus

transceiver unit — 910

processing unit — 920

FIG. 9

random access apparatus 1000

1001

1002 — Memory

1003 — Computer program

processor

1005 — transceiver

antenna

1006

interface circuit

1007

FIG. 10

Memory — 1103

Interface — 1102

Bus

Processor — 1101

FIG. 11

## INTERNATIONAL SEARCH REPORT

| | International application No. |
|---|---|
| | **PCT/CN2022/093408** |

**A. CLASSIFICATION OF SUBJECT MATTER**

H04W 74/08(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 随机接入, 时机, 重复, 多个, 随机接入无线网络临时标识, 第一随机接入消息, 第二随机接入消息, 指示, 系统帧号, random, access, occasion?, RO, multi+, N, RA-RNTI, indication, SFN, MSG1, MSG2

**C. DOCUMENTS CONSIDERED TO BE RELEVANT**

| Category* | Citation of document, with indication, where appropriate, of the relevant passages | Relevant to claim No. |
|---|---|---|
| X | WO 2021227074 A1 (QUALCOMM INC. et al.) 18 November 2021 (2021-11-18) description, paragraphs [0033]-[0175], and figures 1-14 | 1-30 |
| A | CN 111867129 A (VIVO COMMUNICATION TECHNOLOGY CO., LTD.) 30 October 2020 (2020-10-30) entire document | 1-30 |
| A | CN 113973271 A (VIVO COMMUNICATION TECHNOLOGY CO., LTD.) 25 January 2022 (2022-01-25) entire document | 1-30 |
| A | CN 114080047 A (VIVO COMMUNICATION TECHNOLOGY CO., LTD.) 22 February 2022 (2022-02-22) entire document | 1-30 |
| A | WO 2021073412 A1 (GUANGDONG OPPO MOBILE TELECOMMUNICATIONS CORP., LTD.) 22 April 2021 (2021-04-22) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2022** | **14 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/093408**

| Patent document cited in search report | | | Publication date (day/month/year) | Patent family member(s) | | | Publication date (day/month/year) |
|---|---|---|---|---|---|---|---|
| WO | 2021227074 | A1 | 18 November 2021 | None | | | |
| CN | 111867129 | A | 30 October 2020 | None | | | |
| CN | 113973271 | A | 25 January 2022 | None | | | |
| CN | 114080047 | A | 22 February 2022 | None | | | |
| WO | 2021073412 | A1 | 22 April 2021 | EP | 4046455 | A1 | 24 August 2022 |
| | | | | US | 2022240325 | A1 | 28 July 2022 |
| | | | | CN | 114557108 | A | 27 May 2022 |

Form PCT/ISA/210 (patent family annex) (January 2015)